Europäisches Patentamt

European Patent Office

Office européen des brevets

(19)

(11) Veröffentlichungsnummer: **0 144 947**
**B1**

(12) **EUROPÄISCHE PATENTSCHRIFT**

(45) Veröffentlichungstag der Patentschrift:
**05.10.88**

(51) Int. Cl.⁴: **A 22 C 15/00**

(21) Anmeldenummer: **84114633.5**

(22) Anmeldetag: **01.12.84**

(54) Anordnung von Aufhängeschlaufen.

(30) Priorität: **06.12.83 DE 3343968**

(43) Veröffentlichungstag der Anmeldung:
**19.06.85 Patentblatt 85/25**

(45) Bekanntmachung des Hinweises auf die Patenterteilung:
**05.10.88 Patentblatt 88/40**

(84) Benannte Vertragsstaaten:
**AT BE CH DE FR GB IT LI NL SE**

(56) Entgegenhaltungen:
**EP - A - 0 010 937**
**DE - A - 2 529 821**
**DE - A - 3 147 386**
**DE - A - 3 244 775**
**FR - A - 732 135**

(73) Patentinhaber: **Niedecker, Herbert, Dipl.-Ing., Am Ellerhang 6, D-6240 Königstein 2 (DE)**

(72) Erfinder: **Niedecker, Herbert, Dipl.-Ing., Am Ellerhang 6, D-6240 Königstein 2 (DE)**

(74) Vertreter: **Fischer, Ernst, Dr., Neumannstrasse 88, D-6000 Frankfurt am Main 50 (DE)**

ACTORUM AG

# Beschreibung

Die Erfindung betrifft in sich geschlossene Aufhängeschlaufen auf einem Trägerband, die die Merkmale des Oberbegriffes des Anspruchs 1 aufweisen.

Bisher sind solche Aufhängeschlaufen auf einem Trägerband im Abstand nebeneinander mit ihren etwa parallelen Seiten so befestigt, dass zu beiden Seiten des Trägerbandes offene Teilschlaufen überstehen (DE-B-23 52 000). In diesen Fällen werden die Schlaufen zunächst als Einzelschlaufen mit einem Knoten hergestellt und auf das Trägerband aufgebracht. Dies hat eigentlich den Nachteil, dass sich die Einzelschlaufe im Bereich der Teilschlaufe, in der sich der Knoten befindet, leicht verdrallen kann. Dies erschwert das Aufbringen auf den Rauchspiess. Die Knoten können sich auch beim Ablauf des Gurtschlaufbandes von einer Magazinrolle ineinander verhaken, was zu Störungen führen kann. Ausserdem kann der Knoten beim Durchführen der am Darmabschnitt angebrachten Schlaufe durch die Darmbremse stören. Der Erfindung liegt die Aufgabe zugrunde, diese Nachteile zu vermeiden.

Diese Aufgabe wird erfindungsgemäss durch die Merkmale des kennzeichnenden Teiles des Anspruchs 1 gelöst.

Die Verbindung der sich überlappenden Fadenabschnitte für die Fertigstellung der Schlaufe kann durch Kleben, Nähen, Schweissen oder durch maschinelle Verbindung, z.B. Verschliessen mit einer Klammer erfolgen.

Die Verbindungsstelle aus den sich überlappenden Fadenabschnitten kann an einer beliebigen Stelle der Schlaufe liegen. Zweckmässigerweise werden die überlappenden Fadenabschnitte entweder an der Schmalseite der Schlaufe oder im Bereich des Trägerbandes liegen. Wenn die überlappenden Fadenabschnitte an der Schmalseite liegen, kann der die Schlaufen verbindende Fadenabschnitt schon vor dem Aufspulen zu einer Magazinrolle getrennt werden. Die Vereinzelung der Schlaufen erfolgt vor der Übernahme durch die Verschlussklammer in der Verschliessmaschine durch Trennen des Trägerbandes.

Wenn die die Schlaufen verbindenden Fadenabschnitte im Bereich des Trägerbandes liegen, erfolgt deren Trennung gleichzeitig mit dem Durchschneiden des Trägerbandes vor der Übernahme durch die Verschlussklammer in der Verschliessmaschine.

Die erfindungsgemässe Anordnung der Schlaufen hat zunächst den Vorteil, dass der Knoten für die Einzelschlaufe wegfällt und die damit verbundenen Nachteile nicht mehr eintreten können. Ausserdem erübrigt sich die vorherige Herstellung von Einzelschlaufen mit einem Knoten, wodurch eine rationellere Herstellung des magazinierten Schlaufengurtes ermöglicht wird. Ausserdem kann durch den Wegfall des Knotens von dem verhältnismässig teuren Fadenmaterial zwischen 30 und 50% erspart werden. Die Herstellung der Schlaufen bei der erfindungsgemässen Anordnung kann einfach durch die Führung des Endlosfadens um Stifte in die Schlaufenform erfolgen.

Das Trägerband kann entweder nur aus einem Klebestreifen mit einer durchgehenden oder unterbrochenen Klebefläche oder aus einem solchen Klebeband und einem zusätzlichen steiferen Abdeckband bestehen, wobei die Schlaufen zwischen den beiden Bändern angeordnet sind.

Ein Weg zur Herstellung und Anordnung der Aufhängeschlaufen gemäss der Erfindung wird in den Abbildungen beschrieben.

Fig. 1 zeigt eine Möglichkeit zur Herstellung der erfindungsgemässen Anordnung von Aufhängeschlaufen auf einem Trägerband;

Fig. 2 zeigt eine Anordnung von Schlaufen, bei der die überlappenden Fadenabschnitte sich an einer Schmalseite der Schlaufe befinden;

Fig. 3 und 4 zeigen die Anordnungen von Schlaufen, bei denen sich die überlappenden Fadenabschnitte im Bereich des Trägerbandes befinden;

Fig. 5 zeigt eine Anordnung von Schlaufen auf dem Trägerband in einem beliebig zu wählenden Winkel zum Trägerband.

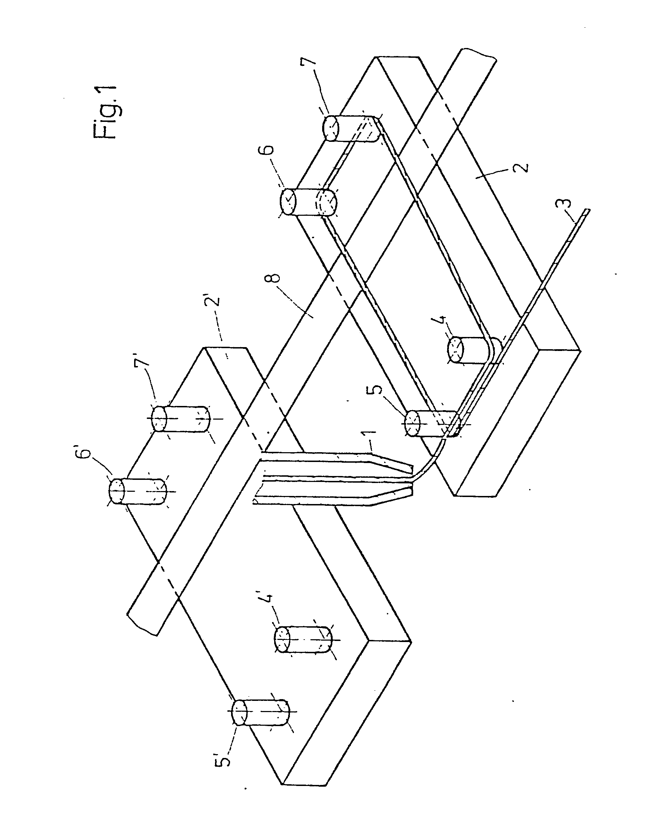

Fig. 1 zeigt zwei Formplatten 2, 2', die aus einer kontinuierlich umlaufenden Vorrichtungskette aus oder mit derartigen Formplatten einen Ausschnitt darstellen. Die Herstellung der Schlaufenanordnung gemäss der Erfindung erfolgt durch einen vorgegebenen Bewegungsablauf des Fadenführers 1 und/oder der Formplatte 2. Dadurch wird der Endlosfaden 3 um die Stifte 4, 5, 6, 7 und wieder um Stift 4 zum Stift 5 geführt. Zur Herstellung der nächsten Schlaufe befindet sich die nächste Formplatte 2' in der Position der vorhergehenden Formplatte 2. Dadurch steht der Fadenführer 1 in der Ausgangsstellung hinter dem Stift 5', so dass der neue Bewegungszyklus beginnen kann. Das Trägerband 8 wird zwischen den Formplatten 2, 2' und dem Faden 3 durchgeführt und in einer nicht gezeigten Position mit den darüberliegenden Fäden verbunden. Gleichzeitig wird das Trägerband 8 gelocht.

In einer weiteren, nicht gezeigten Position werden die zwischen den Stiften 4 und 5 sich überlappenden Fadenabschnitte miteinander verbunden. Anschliessend wird das Trägerband 8 mit den dort angebrachten Schlaufen zu einer Magazinrolle aufgewickelt.

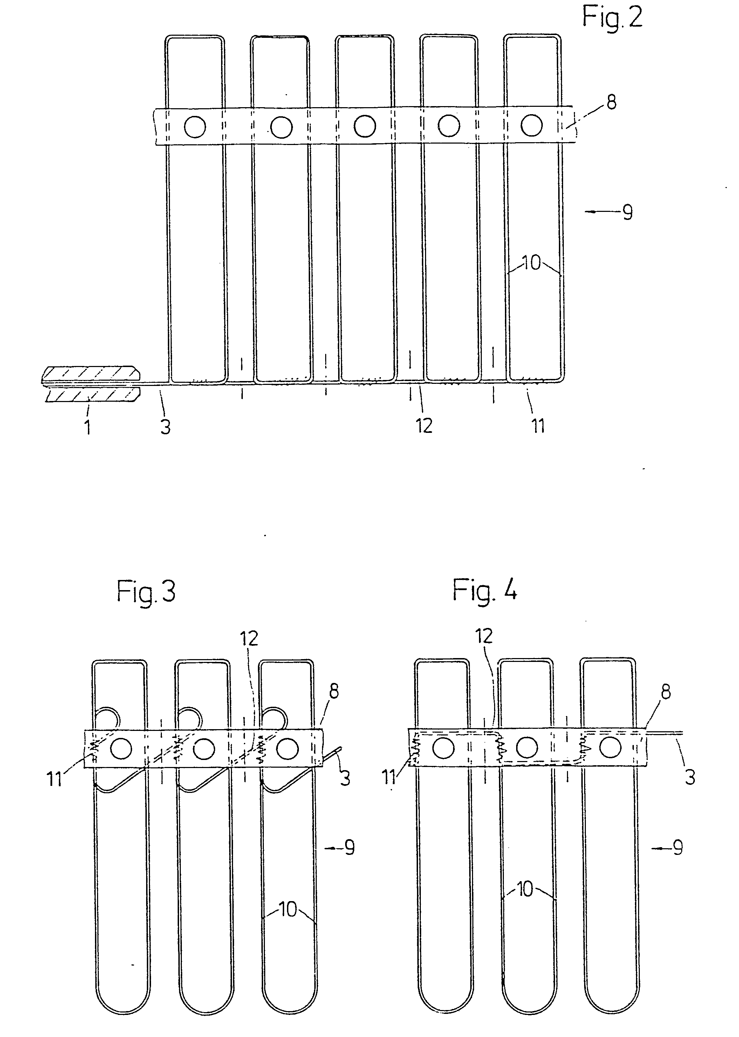

Fig. 2 zeigt ein Stück Schlaufengurt 9, das mit der Vorrichtung nach Fig. 1 hergestellt wurde, in einer Position vor der nicht gezeigten Aufwickelstation. Der Endlosfaden 3 ist in der Form der Schlaufen 10 auf dem Trägerband 8 angeordnet. Die Fäden sind im Verbindungsbereich 11 miteinander zur Schlaufe 10 verbunden. Der die Schlaufen 10 verbindende Fadenabschnitt 12 ist noch nicht getrennt; er kann vor der Aufwickelstation oder vor der Übernahme durch die Verschlusskammer in der Verschliessmaschine durchschnitten werden.

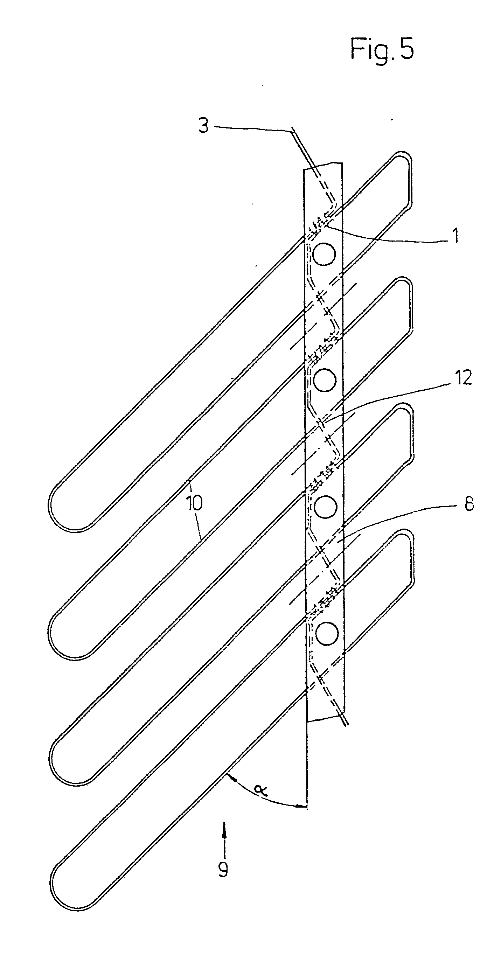

Fig. 3 und 4 zeigen ebenfalls je einen Schlaufengurt 9. Die Schlaufen 10 sind auch mit einer Vorrichtung entsprechend der Fig. 1, aber mit Stiften in geänderter Position entsprechend dem beabsichtigten Fadenverlauf hergestellt. Dadurch sind der Verbindungsbereich 11 und der die Schlaufen 10 verbindende Fadenabschnitt 12 in den Bereich der Trägerbandes 8 gekommen. Das Fadenabschnitt 12 wird zusammen mit dem Trägerband 8 vor der Übernahme durch die Verschlusskammer in der Verschliessmaschine durchschnitten.

Fig. 5 zeigt einen Schlaufengurt 9, bei dem die Schlaufen 10 unter einem spitzen Winkel α zum Trägerband 8 angeordnet sind. Der Winkel α kann zwischen 90° und 0° betragen.

### Patentansprüche

1. In sich geschlossene Aufhängeschlaufen (10), die auf einem Trägerband (8) magaziniert sind und auf diesem Trägerband (8) einzeln einer Verschliessmaschine zugeführt werden, auf der Schläuche und Beutel mit einer Verschlussklammer aus Metall verschlossen werden, in die die einzelne Aufhängeschlaufe (10) vor dem Verschlissen eingelegt wird, dadurch gekennzeichnet, dass die Schlaufen (10) auf dem Trägerband (8) aus einem Endlosfaden (3) gebildet sind, der sich in Teilbereichen (11) überlappt und dass die sich überlappenden Fadenabschnitte (11) mindestens teilweise fest miteinander verbunden sind und dass die Vereinzelung der Schlaufen (10) durch Trennung an den die Schlaufen verbindenden Abschnitten (12) des Endlosfadens (3) erfolgt.

2. Magazinierte Aufhängeschlaufen nach Anspruch 1, dadurch gekennzeichnet, dass die die Schlaufen vor der Trennung verbindenden Abschnitte (12) des Endlosfadens (3) im Bereich des Trägerbandes (8) liegen.

### Claims

1. Hanging loops (10) closed on themselves which are in a magazine on a carrier belt (8) and are delivered individually to a sealing machine on said carrier belt (8), on which machine tubes and bags are sealed with a metal sealing clip, into which the individual hanging loop (10) is inserted before sealing, characterised in that the loops (10) are formed on said carrier belt (8) from a continuous filament (3) which overlaps itself in partial areas (11), and that the filament sections (11) overlapping each other are connected fixedly to each other at least in part, and that the detaching of the loops (10) takes place by separation at the sections (12) of the continuous filament (3) connecting the loops.

2. Hanging loops in a magazine according to Claim 1, characterised in that the sections (12) of the continuous filament (3) connecting the loops before separation are located in the area of the carrier belt (8).

### Revendications

1. Boucles de suspension (10), fermées sur elles-mêmes, qui sont emmagasinées sur et bande-support (8) et qui sont amenées sur cette bande-support (8) individuellement à une machine de fermeture, sur laquelle des enveloppes tubulaires et des sachets sont fermés par une bride métallique de fermeture dans laquelle les boucles de suspension (10) sont introduites avant la fermeture, caractérisées en ce que les boucles (19) sur la bande-support (8) sont formées d'un fil sans fin (3) qui se recouvre dans certaines régions (11) et en ce que les tronçons de fil à recouvrement (11) sont reliés, au moins partiellement, solidement l'un à l'autre et en ce que l'individualisation des boucles (10) s'effectue par séparation sur les tronçons (12) du fil sans fin (3), qui relient les boucles.

2. Boucles de suspension qui sont emmagasinées suivant la revendication 1, caractérisées en ce que les tronçons (12) du fil sans fin (3), qui relient les boucles avant la séparation, se trouvent dans la région de la bande-support (8).

Fig.1

Fig. 2

Fig. 3

Fig. 4

# Fig.5